# EUROPÄISCHE PATENTSCHRIFT

(11) **EP 3 632 568 B1**
(45) Veröffentlichungstag und Bekanntmachung des Hinweises auf die Patenterteilung: **27.10.2021**
(21) Anmeldenummer: 19195541.8
(22) Anmeldetag: 05.09.2019
(51) Int. Cl.: B01L 7/00, B01L 3/00

(54) **VORRICHTUNG ZUR THERMISCHEN BEHANDLUNG VON PROBEN**
DEVICE FOR THE THERMAL TREATMENT OF SAMPLES
DISPOSITIF DE TRAITEMENT THERMIQUE DES ÉCHANTILLONS

(30) Priorität: 02.10.2018 DE 102018124408
(43) Veröffentlichungstag der Anmeldung: 08.04.2020
(73) Patentinhaber: Biometra GmbH, 37079 Göttingen (DE)
(72) Erfinder: Appel, Eggert, 37139 Adelebsen (DE); Junghans, Janek, 37085 Göttingen (DE); Missal, Konstantin, 34125 Kassel (DE)
(74) Vertreter: Andres, Angelika Maria

(56) Entgegenhaltungen:
- WO-A1-01/46688
- DE-A1- 10 115 848
- DE-T2- 69 826 834
- DE-U1- 20 006 546
- DE-U1- 29 925 002
- US-A1- 2016 016 163

## Beschreibung

Die Erfindung betrifft eine Vorrichtung zur thermischen Behandlung von Proben. Die Vorrichtung umfasst eine Basiseinheit, die einen Aufnahmebereich zum Aufnehmen eines oder mehrerer Reaktionsgefäße, das oder die jeweils eine zu behandelnde Probe enthalten können, aufweist. In dem Aufnahmebereich ist ein Temperierblock für die thermische Behandlung der Proben angeordnet. Weiter weist die Vorrichtung einen Deckel zum Schließen des Aufnahmebereichs auf, der von einer ersten, geöffneten Position in eine zweite, geschlossene Position bewegbar ist, wobei der Deckel eine Abdeckplatte mit einer Vorderfläche enthält. Die Vorderfläche ist dazu bestimmt, gegen auf den Temperierblock aufgesetzte Reaktionsgefäße eine vorgegebene Anpresskraft auszuüben, wenn sich der Deckel in der zweiten Position befindet.

Eine derartige Vorrichtung kann beispielsweise ein Thermocycler sein. Solche Geräte werden dazu verwendet, Proben einem vorgegebenen Temperaturverlauf auszusetzen, beispielsweise zur Inkubation oder zur Durchführung der Polymerase-Kettenreaktion (PCR), die in der Regel in einer Vielzahl von Zyklen erfolgt, in denen die Proben mit DNA-Polymerase zunächst aufgeheizt und dann wieder abgekühlt werden. Der Temperierblock kann eine Vielzahl von Aufnahmen für Reaktionsgefäße aufweisen. Diese Aufnahmen können als Vertiefungen in einer Oberfläche des Temperierblocks ausgestaltet sein. Die Reaktionsgefäße können als in einer Mikrotiterplatte gebildete Aufnahmen, z.B. in Form von Näpfchen (englischer Fachbegriff: Microwells), ausgestaltet sein. Die Näpfchen können beispielsweise als Einsenkungen der Mikrotiterplatte gebildet sein, die in entsprechende Aufnahmen im Temperierblock eingreifen können, wenn die Mikrotiterplatte auf dem Temperierblock aufgesetzt ist. Es gibt aber auch Mikrotiterplatten, z.B. die sog. 1536-Mikrotiterplatten, bei denen die Reaktionsgefäße durch eine Wabenstruktur auf einer planen Grundfläche ausgebildet sind. Zur Temperierung von in solchen Mikrotiterplatten enthaltenen Proben wird ein Temperierblock mit planer Oberfläche verwendet, die rückseitig gegen die Grundfläche der Mikrotiterplatte anliegt, wenn die Mikrotiterplatte auf dem Temperierblock aufgesetzt ist. Es gibt Thermocycler, die dazu ausgestaltet sind, Reaktionsgefäße durch einen Deckel in festen thermischen Kontakt mit dem Temperierblock anzudrücken. Hierzu muss eine Anpresskraft gegen den Deckel aufgebracht werden. Für die In-situ-PCR bzw. Hybridisierung sind außerdem Objektträger bekannt, bei denen die Probe auf einen jeweils durch einen von einer Einfassung umgebenen Oberflächenbereich aufgebracht wird. Solche auf Objektträgern aufgebrachte Proben können ebenfalls in Thermocyclern thermisch behandelt werden.

Aus EP 1 013 342 A2 ist eine gattungsgemäße, automatisch betätigbare Thermocyclervorrichtung bekannt. Sie weist eine Basiseinheit auf, in der ein Aufnahmebereich mit einem Temperierblock zum Aufnehmen eines oder mehrerer nach oben offener Reaktionsgefäße enthalten ist. Weiter umfasst die Thermocyclervorrichtung einen mit der Basiseinheit über ein Scharniergelenk verbundenen Deckel. Der Deckel kann, insbesondere mittels eines Motors, um das Scharniergelenk verschwenkt werden, um den Aufnahmebereich zu verschließen und wieder zu öffnen. An der Thermocyclervorrichtung sind Federelemente derart angeordnet, dass der Deckel und das bzw. die Reaktionsgefäße aneinandergedrückt werden können, und die Reaktionsgefäße unmittelbar vom Deckel abgeschlossen werden. Um eine erhöhte Anpresskraft des Deckels gegen die Reaktionsgefäße zu erzielen, umfasst die Vorrichtung außerdem einen zusätzlichen elektrochemischen Linearmotor, der derart angeordnet ist, dass nach dem Fixieren des Deckels auf der Basiseinheit der Deckel und die Reaktionsgefäße aneinandergedrückt werden können.

Nachteilig ist hierbei zum einen, dass für das Öffnen und Schließen des Deckels und zum Ausüben einer Anpresskraft des Deckels gegen die Reaktionsgefäße zwei verschiedene Motoren benötigt werden. Zum anderen werden durch die Schwenkbewegung des Deckels um das Scharniergelenk Scherkräfte, d.h. Kräfte mit einer horizontalen Kraftkomponente, auf die Reaktionsgefäße ausgeübt. Dies kann sich beispielsweise nachteilig auswirken, wenn eine die Reaktionsgefäße umfassende Mikrotiterplatte durch eine Dichtungsmatte (Engl. Fachbegriff: sealing mat) abgeschlossen und abgedichtet ist, die zwischen dem Deckel und der Mikrotiterplatte eingepresst wird. Durch die horizontale Kraftkomponente kann sich die Dichtungsmatte insbesondere im Randbereich aufwellen oder verschieben, so dass die dort befindlichen Reaktionsgefäße mangelhaft abgedichtet sind. Ein weiterer Nachteil der in EP 1 013 342 A2 beschriebenen Vorrichtung ist der relativ große Platzbedarf in der Höhe beim Öffnen bzw. Schließen des Deckels.

Aus EP 0 955 097 B1 ist ein Thermocycler mit automatisch verschließbarem Deckel bekannt, der ebenfalls eine Basiseinheit mit einem einen Temperierblock enthaltenden Aufnahmebereich für Reaktionsgefäße aufweist. Der Deckel ist über Druckfedern mit einem plattenförmigen Heizelement, im Folgenden als Heizplatte bezeichnet, gekoppelt. Der Deckel mit der Heizplatte ist zwischen einer ersten Position, in der der Deckel den Aufnahmebereich verschließt und die Heizplatte die Reaktionsgefäße bedeckt, und einer zweiten Position, in der der Deckel den Aufnahmebereich offen lässt bzw. in der die Heizplatte die Reaktionsgefäße nicht bedeckt, mittels eines Deckelträgers bewegbar. Der Deckelträger dient zum Verschieben des Deckels entlang eines parallel zu der Oberfläche des Temperierblocks, mit einem vorgegebenen Abstand von dem Temperierblock verlaufenden ersten Wegabschnitts auf einen Anschlag zu, bis der Deckel an den Anschlag anstößt. In dieser Position sind der Deckel und die Heizplatte parallel zum Heizblock ausgerichtet und vertikal von diesem beabstandet. Durch weiteres Verschieben des Deckelträgers wird der Deckel anschließend entlang eines zweiten Wegabschnitts nach unten bewegt, bis er auf die Reaktionsgefäße einen vorgegebenen Druck ausübt. Hierzu wird der Deckel in Führungsschlitzen in gegenüberliegenden, an dem Deckelträger befestigten Platten derart geführt, dass die horizontale Bewegung des Deckelträgeres eine Abwärtsbewegung des Deckels auf die Reaktionsgefäße zu bewirkt. Der Druck, mit dem die Heizplatte bei Erreichen der Endposition des Deckels an den Reaktionsgefäßen anliegt, ist durch die Form und den Verlauf der Führungsschlitze und durch die Druckfedern bestimmt, die die mit dem Deckel gekoppelte Heizplatte gegen die Reaktionsgefäße andrücken. Der Druck, den die Heizplatte auf die Reaktionsgefäße ausübt, ist somit nicht variabel oder speziell auf die Art der verwendeten Reaktionsgefäße abstimmbar. Dadurch, dass der Deckel durch eine Verschiebung in horizontaler Richtung gegenüber dem Temperierblock verschoben wird, um den Aufnahmebereich zu öffnen oder zu verschließen, nimmt die gesamte Vorrichtung einen verhältnismäßig großen Raum, insbesondere eine große Fläche auf einer Unterlage, ein. Dies ist im Hinblick auf eine effiziente Nutzung von Arbeitsflächen in Laboratorien nachteilig.

US2016/0016163A1 beschreibt einen Deckel für automatisierte Instrumente. Der Verschlussmechanismus basiert auf einer Rotationsbewegung und einer vertikalen Bewegung. Eine Rotationsbewegung versuracht dabei auch eine vertikale Bewegung.

Die DE29925002U1 betrifft einen Thermocycler mit einem Deckel und einem Schließmechanismus, mit der ein individuell einstellbarer Druck auf die Reaktionsgefäße ausübbar ist. Aus der DE69816834T2 ist zudem ein Mechanismus zur Hin- und Her-Bewegung eines Deckels einer Temperiereinrichtung zwischen einer ersten und zweiten Position mit einem horizontalen und einem vertikalen Wegabschnitt bekannt geworden.

Es ist die Aufgabe der vorliegenden Erfindung, eine gegenüber dem Stand der Technik verbesserte Vorrichtung zur thermischen Behandlung von Proben anzugeben.

Diese Aufgabe wird gelöst durch die Vorrichtung gemäß Anspruch 1. Vorteilhafte Ausgestaltungen sind in den abhängigen Ansprüchen angegeben.

Die erfindungsgemäße Vorrichtung zur thermischen Behandlung von Proben, umfasst:
eine Basiseinheit, die einen Aufnahmebereich zum Aufnehmen eines oder mehrerer Reaktionsgefäße aufweist;
einen in dem Aufnahmebereich angeordneten Temperierblock;
einen Deckel zum Schließen des Aufnahmebereichs, der von einer ersten, geöffneten Position in eine zweite, geschlossene Position bewegbar ist, wobei der Deckel eine Abdeckplatte enthält, die eine Vorderfläche aufweist, wobei die Vorderfläche dazu ausgestaltet ist, gegen auf den Temperierblock aufgesetzte Reaktionsgefäße eine vorgebbare Anpresskraft auszuüben, wenn sich der Deckel in der zweiten Position befindet;
mindestens ein mit dem Deckel verbundenes Verbindungselement;
genau einen in der Basiseinheit angeordneten Deckelantrieb, der mit dem mindestens einen Verbindungselement gekoppelt ist, um eine Bewegung des Deckels von der ersten in die zweite Position und/oder von der zweiten in die erste Position anzutreiben;
wobei der Deckelantrieb derart mit dem mindestens einen Verbindungselement gekoppelt ist, dass der Deckel mit der Abdeckplatte bei der Bewegung von der ersten in die zweite Position in einem ersten Bewegungsabschnitt von der ersten Position zunächst in eine dritte Position gebracht wird, in der die Vorderfläche der Abdeckplatte parallel zu dem Temperierblock verläuft und von diesem beabstandet ist, und wobei der Deckel und die Abdeckplatte in einem darauffolgenden zweiten Bewegungsabschnitt in Richtung einer gemeinsamen Normalen der Vorderfläche und einer Ebene, in der der Temperierblock angeordnet ist, auf die Basiseinheit zu bewegt werden, bis der Deckel die zweite Position erreicht hat.

Die Reaktionsgefäße können z.B. als einzelne Reaktionsgefäße (auch mit dem englischen Fachbegriff "tubes" bezeichnet), oder als in Mikrotiterplatten zusammengefasste Reaktionsgefäße ausgestaltet sein. Die Mikrotiterplatte kann eine plane Rückseite aufweisen, alternativ können die Reaktionsgefäße aber auch als eine Vielzahl von Vertiefungen in der Mikrotiterplatte gebildet sein. Der Temperierblock kann in einer möglichen Ausgestaltung eine Vielzahl von Aufnahmen für ein oder mehrere Reaktionsgefäße aufweisen. Eine Mikrotiterplatte mit einer Vielzahl von als Reaktionsgefäße dienenden Vertiefungen kann im Betrieb des Temperierblockmoduls derart auf einen solchen Temperierblock aufgesetzt werden, dass die einzelnen Vertiefungen jeweils in eine Aufnahme des Temperierblocks eingreifen. Alternativ kann der Temperierblock eine im Wesentlichen plane Oberfläche aufweisen. In diesem Fall kann im Betrieb des Temperierblockmoduls eine Mikrotiterplatte mit flacher Rückseite auf die Oberfläche des Temperierblocks aufgelegt sein.

Die Reaktionsgefäße können mit einer an den Reaktionsgefäßen bzw. der Mikrotiterplatte anliegenden, insbesondere selbstklebenden, Dichtungsmatte oder Dichtungsfolie verschlossen sein. Eine Dichtungsmatte kann auch auf die Reaktionsgefäße aufgelegt sein und/oder an diesen lösbar befestigt sein. Alternativ kann eine solche Dichtungsmatte lösbar an der Abdeckplatte des Deckels befestigt sein. Die Reaktionsgefäße können in einer weiteren alternativen Ausgestaltung auch durch einen Wachspfropfen oder Verschlusskappen dicht verschlossen sein. In der zweiten Position des Deckels liegt die Vorderfläche der Abdeckplatte entsprechend der genannten möglichen Ausgestaltungen unmittelbar gegen die Reaktionsgefäße oder gegen eine zwischen der Abdeckplatte und den Reaktionsgefäßen angeordnete Dichtungsmatte oder Dichtungsfolie an, um die gewünschte Anpresskraft auf die Reaktionsgefäße auszuüben.

Indem bei der erfindungsgemäßen Vorrichtung der Deckel nicht über ein Scharniergelenk mit der Basiseinheit verbunden ist, und somit der Deckel mit der Abdeckplatte nicht in einer Schwenkbewegung um ein solches Gelenk geschlossen wird, werden von der Abdeckplatte keine Scherkräfte auf im Temperierblock angeordnete Reaktionsgefäße ausgeübt. Vielmehr wird die Abdeckplatte bei der Bewegung des Deckels von der dritten in die zweite Position in einer zu einer Ebene, in der der Temperierblock angeordnet ist, parallelen Orientierung senkrecht auf den Temperierblock und darauf aufgesetzte Reaktionsgefäße abgesenkt, so dass die Vorderfläche der Abdeckplatte bei Erreichen der zweiten Position alle Reaktionsgefäße gleichzeitig erreicht und eine ausschließlich senkrecht zum Temperierblock gerichtete Kraft auf die Reaktionsgefäße ausübt. Ein Verschieben oder Aufwellen einer die Reaktionsgefäße abdeckenden Dichtung, z.B. einer auf den Reaktionsgefäßen aufliegenden Dichtungsmatte und eine daraus resultierende mangelhafte Abdichtung der Reaktionsgefäße ist damit vermieden. Bei Bewegung des Deckels in umgekehrter Richtung, also aus der zweiten in die dritte Position, beim Öffnen des Deckels ist das Auftreten von horizontalen Kraftkomponenten auf die Reaktionsgefäße bzw. auf eine auf den Reaktionsgefäßen aufliegende Dichtungsmatte ebenfalls vermieden. Damit werden ruckartige Bewegungen der Reaktionsgefäße bzw. der Dichtungsmatte vermieden, die im ungünstigsten Fall dazu führen können, dass ein Teil der behandelten Probe die Dichtungsmatte oder die Verschlusskappe benetzt, dort anhaftet und somit für die weitere Verarbeitung der Probe verlorengeht. Der die senkrecht zur Ebene des Temperierblocks gerichtete Bewegung des Deckels und der Abdeckplatte antreibende Deckelantrieb kann außerdem zur variablen, und damit vorgebbaren Einstellung einer Anpresskraft der Abdeckplatte an die Reaktionsgefäße dienen.

Unter der erwähnten Ebene, in der der Temperierblock angeordnet ist, wird hier und im Folgenden eine gedachte Ebene verstanden, die durch eine Oberfläche des Temperierblocks definiert ist. Diese Oberfläche kann, wie erwähnt, z.B. eine im Wesentlichen plane Oberfläche sein oder Aufnahmen für Reaktionsgefäße umfassen. Diese Ebene ist in der Regel, d.h. insbesondere beim bestimmungsgemäßen Gebrauch der Vorrichtung, horizontal orientiert. Sind Aufnahmen für Reaktionsgefäße vorhanden, können diese beispielsweise als Vertiefungen in der Oberfläche oder als auf die Oberfläche aufgesetzte, beispielsweise zylindrische, Aufnahmebehälter ausgestaltet sein.

Zum Antreiben der Bewegung des Deckels von der ersten Position über die dritte Position in die zweite Position bzw. in umgekehrter Richtung von der zweiten Position über die dritte Position in die erste Position und zum Einstellen der vorgebbaren Andruckkraft der Abdeckplatte gegen die Reaktionsgefäße wird bei der hier beschriebenen Vorrichtung zudem vorteilhafterweise nur ein einziger Deckelantrieb benötigt.

Die über mindestens ein Verbindungselement realisierte Kopplung des Deckelantriebs mit dem Deckel kann vorteilhaft über zwei Verbindungselemente, z.B. Verbindungsplatten oder Verbindungsarme, realisiert sein, die an einander gegenüberliegenden Seiten des Deckels befestigt sind. Auch bei allen im Folgenden beschriebenen möglichen Ausgestaltungen kann das mindestens eine Verbindungselement in Form zweier, an einander gegenüberliegenden Seiten des Deckels angeordneter Verbindungselemente ausgestaltet sein.

Erfindungsgemäß ist die Vorderfläche der Abdeckplatte in der ersten Position des Deckels gegenüber dem Temperierblock geneigt.

Der Deckelantrieb kann zur Einstellung der senkrecht zu der Vorderfläche der Abdeckplatte wirkenden Anpresskraft, die der Deckelantrieb während des zweiten Bewegungsabschnitts über das mindestens eine Verbindungselement auf den Deckel und die Abdeckplatte ausübt, steuerbar sein, so dass mittels des Deckelantriebs die Anpresskraft (bzw. ein Anpressdruck) der Vorderfläche der Abdeckplatte gegen auf den Temperierblock aufgesetzte Reaktionsgefäße einstellbar und/oder steuerbar ist.

Der Deckelantrieb kann einen Motor, insbesondere einen Elektromotor, aufweisen, wobei die Vorrichtung weiter eine mit dem Deckelantrieb verbundene oder verbindbare Antriebssteuerung umfasst, die dazu eingerichtet ist, insbesondere anhand einer Vorgabe durch einen Benutzer oder eine mit der Antriebssteuerung verbundene übergeordnete Steuerung, die Kraft einzustellen, die der Deckelantrieb über das mindestens eine Verbindungselement auf den Deckel und die Abdeckplatte ausübt. Hierzu kann die Antriebssteuerung einen Prozessor und Speicher umfassen, wobei in dem Speicher ein Betriebsprogramm zur entsprechenden Steuerung und Einstellung der auszuübenden Kraft abgelegt ist, und wobei der Prozessor dazu eingerichtet ist, das Programm auszuführen. Ein Benutzer oder die übergeordnete Steuerung können somit durch ein entsprechendes Signal an die Antriebssteuerung, das z.B. durch eine Eingabe des Benutzers oder automatisiert durch die Steuerung generiert werden kann, die auszuübende Kraft beliebig einstellen.

Die Antriebssteuerung und/oder die übergeordnete Steuerung können weiter dazu eingerichtet sein anhand einer vorgegebenen Kennung mindestens eines in der Basiseinheit aufgenommenen Reaktionsgefäßes ein die einzustellende Kraft repräsentierendes Steuersignal zu erzeugen und auszugeben. Das erwähnte Betriebsprogramm kann eine entsprechende Funktionalität bereitstellen. Da es vorteilhaft sein kann, für die Behandlung von in unterschiedlichen Typen von Reaktionsgefäßen enthaltenen Proben unterschiedliche Anpresskräfte der Abdeckplatte gegen die Reaktionsgefäße einzustellen, erlaubt die Vorrichtung in dieser Ausgestaltung das Eingeben oder Einlesen einer Kennung der Reaktionsgefäße. Aus der Kennung kann von der Antriebssteuerung und/oder der übergeordneten Steuerung ein Steuersignal für den Deckelantrieb bzw. den Motor des Deckelantriebs erzeugt werden, um eine zu der entsprechenden Kennung passende Anpresskraft einzustellen.

Das mindestens eine Verbindungselement kann starr mit dem Deckel gekoppelt sein. Sind zwei Verbindungselemente vorhanden, können diese entsprechend beide starr mit dem Deckel gekoppelt sein.

Das mindestens eine Verbindungselement kann mit einer in der Basiseinheit angeordneten Führung derart gekoppelt sein, dass die Bewegung des mindestens einen Verbindungselements während des zweiten Bewegungsabschnitts linear in zur Abdeckplatte senkrechter Richtung geführt ist. Der Deckelantrieb kann somit auf das Verbindungselement eine beliebig vorgebbare, senkrecht zur Vorderfläche der Abdeckplatte gerichtete Kraft ausüben, die gleichzeitig die Anpresskraft bestimmt, mit der die Vorderfläche der Abdeckplatte gegen im Temperierblock angeordnete Reaktionsgefäße gedrückt wird.

Ein Abschnitt der Führung, der die Bewegung des mindestens einen Verbindungselements während des zwischen der dritten und der zweiten Position verlaufenden zweiten Bewegungsabschnitts führt, kann senkrecht zum Temperierblock, d.h. senkrecht zu der Ebene, in der der Temperierblock angeordnet ist, verlaufen.

Der Deckelantrieb kann eine drehbare Antriebswelle umfassen, die starr mit mindestens einem sich senkrecht zu der Antriebswelle erstreckenden Hebelarm verbunden ist, wobei der Hebelarm über eine Führung mit dem mindestens einen Verbindungselement gekoppelt ist.

Die Führung kann in einer alternativen Ausgestaltung eine drehbar an dem mindestens einen Verbindungselement gelagerte Linearführung für den Hebelarm sein. Die Linearführung kann um eine parallel zur Antriebswelle verlaufende Rotationsachse drehbar sein. Auf diese Weise ist es möglich, einen zwischen dem Hebelarm und dem Verbindungselement eingeschlossenen Winkel bzw. einen zwischen dem Hebelarm und einer gedachten, durch die Vorderfläche der Abdeckplatte verlaufenden Ebene eingeschlossenen Winkel während der Bewegung des Deckels mit der Abdeckplatte von der ersten in die zweite Position oder in umgekehrter Richtung zu variieren.

Die Führung ist in einer anderen möglichen Ausgestaltung durch einen in dem Hebelarm oder dem mindestens einen Verbindungselement angeordneten Führungsschlitz und mindestens einen in dem Führungsschlitz beweglichen Stift gebildet. Unter einem Führungsschlitz wird hier und im Folgenden nicht nur ein vollständig durch den Hebelarm durchgehender Schlitz verstanden, sondern auch eine Führungsnut, die auf einer Seite des Hebelarms geschlossen ist. Wesentlich ist, dass der bewegliche Stift in dem Führungsschlitz entlang eines durch den Führungsschlitz vorgegebenen Wegs geführt wird.

Eine Bewegung des mindestens einen Verbindungselements während des ersten und zweiten Bewegungsabschnitts kann in einer in der Basiseinheit angeordneten Führung geführt sein. Beispielsweise kann das mindestens eine Verbindungselement mindestens ein Kopplungselement, z. B. einen Stift, aufweisen, wobei die Führung eine in der Basiseinheit angeordnete Führungsplatte umfasst, die einen Führungsschlitz aufweist, in dem das mindestens eine Kopplungselement geführt ist.

Wie bereits erwähnt, kann das mindestens eine Verbindungselement in Form von zwei an einander gegenüberliegenden Seiten des Deckels angeordneten Verbindungselementen realisiert sein. Diese können als an gegenüberliegenden Seiten des Deckels starr mit dem Deckel verbundene Verbindungsarme ausgestaltet sein, die sich in senkrechter Richtung zur Vorderfläche der Abdeckplatte erstrecken. In diesem Fall können in der Basiseinheit zwei einander auf verschiedenen Seiten des Deckelantriebs gegenüberliegend angeordnete Führungsplatten oder-wände vorhanden sein, in denen jeweils ein die Bewegung eines der Verbindungselemente führender Führungsschlitz ausgebildet ist. Die Verbindungselemente umfassen in dieser Ausgestaltung jeweils mindestens ein Koppelelement, z.B. einen Stift, der in einem der Verbindungsschlitze geführt ist.

In einer vorteilhaften Ausgestaltung umfasst der Deckelantrieb ein selbsthemmendes Getriebe. Das Getriebe kann beispielsweise ein Schneckengetriebe sein. Dieses kann eine hohe Übersetzung besitzen, so dass es selbsthemmend oder quasi-selbsthemmend ist. Auch andere selbsthemmend ausgestaltete Getriebeformen sind denkbar, wobei die Selbsthemmung beispielsweise durch geeignete Materialpaarungen erzeugt sein kann. Durch die Selbsthemmung ist es möglich, die Vorrichtung derart auszugestalten, dass nach dem Erreichen der zweiten Position des Deckels, d.h. der geschlossenen Endposition des Deckels, in der die Abdeckplatte mit der vorgegebenen Anpresskraft gegen die Reaktionsgefäße anliegt, den Motor des Deckelantriebs auszuschalten, ohne dass der auf die Reaktionsgefäße wirkende Anpressdruck nachlässt. Ist das Getriebe nicht oder nicht vollständig selbsthemmend, kann die Anpresskraft durch fortgesetztes Betreiben des Motors, ggfs. mit einem geringeren Stromverbrauch im Vergleich zum Stromverbrauch beim Bewegen des Deckels zwischen der ersten und der zweiten Position, aufrechterhalten werden. Die Basiseinheit kann alternativ auch eine Feststellbremse umfassen, die die Deckelposition im geschlossenen Zustand hält, wenn das Getriebe nicht oder nicht vollständig selbsthemmend ausgestaltet ist.

Die Basiseinheit kann ein Gehäuse umfassen, das mindestens eine, beispielsweise durch eine Tür oder eine abnehmbare Wandung, verschließbare Öffnung aufweist, die einen Zugang zum manuellen Betätigen des Deckelantriebs erlaubt. Dies ist für den Fall vorteilhaft, dass der Deckelantrieb aufgrund eines Defekts nicht mehr automatisch betätigt werden kann. In einem solchen Fall gewährleistet die Vorrichtung trotzdem noch einen Zugang zum Aufnahmebereich mit den Reaktionsgefäßen.

In einer weiteren vorteilhaften Ausgestaltung umfasst die Basiseinheit einen mit einem oder mehreren Motoren automatisch betätigbaren Auswurfmechanismus, der dazu dient, in dem Temperierblock angeordnete Reaktionsgefäße in Richtung einer Normalen der Ebene, in der der Temperierblock angeordnet ist, zu bewegen. Dieser Auswurfmechanismus kann dazu ausgestaltet sein, die Reaktionsgefäße vom Temperierblock abzuheben. Dies erleichtert es einem automatischen Greifer, die Reaktionsgefäße aus dem Aufnahmebereich zu entnehmen.

In einer Ausgestaltung der Vorrichtung kann der Temperierblock auf oder in einem Temperierblockmodul angeordnet sein, das in der Basiseinheit befestigt ist. Der Auswurfmechanismus kann mindestens einen, vorzugsweise zwei oder mehr, beispielsweise vier oder eine andere Anzahl an Auswurfstößeln umfassen, die in dem Temperierblockmodul senkrecht zu diesem beweglich gelagert sind. Die Auswurfstößel können an der Peripherie des Temperierblocks angeordnet sein, so dass sie dazu geeignet sind, eine in dem Temperierblock angeordnete Mikrotiterplatte anzuheben, indem sie von unten an einen über den Temperierblock hinaus ragenden Randbereich der Mikrotiterplatte anschlagen.

Zum Antrieb der Bewegung des oder der Auswurfstößel kann die Vorrichtung einen oder mehrere an der Unterseite des Temperierblockmoduls angeordnete Stößelantriebe umfassen. Sind mehrere Auswurfstößel vorhanden, ist vorzugsweise jedem Auswurfstößel ein eigener Stößelantrieb zugeordnet. In diesem Fall sind also gleich viele Stößelantriebe wie Auswurfstößel vorhanden. Vorteilhaft sind die Stößelantriebe unabhängig voneinander mittels einer zentralen Steuerung betätigbar. Beispielsweise kann die weiter oben erwähnte Antriebssteuerung zur Steuerung des Deckelantriebs zusätzlich zur Steuerung der Stößelantriebe ausgestaltet sein. Die Stößelantriebe können von der Antriebssteuerung steuerbare, Elektromotoren, insbesondere Linearmotoren, umfassen. Vorzugsweise ist die zentrale Steuerung dazu eingerichtet, die Stößelantriebe unabhängig voneinander zu steuern, so dass wahlweise, d.h. je nach Vorgabe eines von der zentralen Steuerung ausgeführten Betriebsprogramms, die Stößel zu unterschiedlichen Zeiten aus dem Temperierblockmodul in eine herausgefahrene Stellung bewegt und/oder wieder in eine in das Temperierblockmodul zurückgezogene Stellung bewegt werden, oder aber synchron in die herausgefahrene und/oder die zurückgefahrene Stellung bewegt werden können.

Die Erfindung wird im Folgenden anhand der in den Figuren dargestellten Ausführungsbeispiele näher erläutert. Es zeigen:
- Fig. 1a, b, c: schematische Darstellungen einer Vorrichtung zur thermischen Behandlung von Proben bei verschiedenen Positionen ihres Deckels;
- Fig. 2a, b, c, d, e: schematische Längsschnitt-Darstellungen der Vorrichtung gem. Fig. 1a-c bei verschiedenen Positionen ihres Deckels mit einer ersten Schnittebene;
- Fig. 3a, b: schematische Längsschnitt-Darstellungen der Vorrichtung gem. Fig. 1a-c mit einer zweiten Schnittebene;
- Fig. 4: eine schematische Längsschnitt-Darstellung der Vorrichtung gem. Fig. 1a-c mit einer senkrecht zur ersten und zweiten Schnittebene verlaufenden dritten Schnittebene;
- Fig. 5: eine schematische Detail-Darstellung eines Schnitts durch ein Temperierblockmodul der Vorrichtung gem. Fig. 1a-c mit einem Auswurfmechanismus.

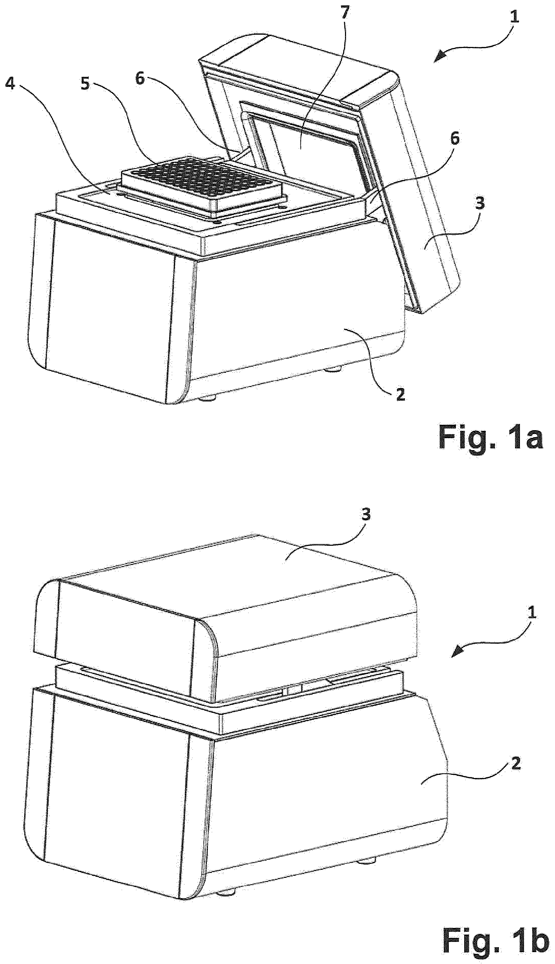

In den Fig. 1a-c, 2a-e, 3a und b, 4 und 5 ist schematisch ein Ausführungsbeispiel für eine Vorrichtung 1 zur thermischen Behandlung von Proben, ein sogenannter Thermocycler, dargestellt. Identische Bezugszeichen bezeichnen dabei identisch ausgestaltete Elemente der Vorrichtung. Eine Vielzahl von gleich wirkenden Abwandlungen sind möglich, ohne vom Erfindungsgedanken abzuweichen.

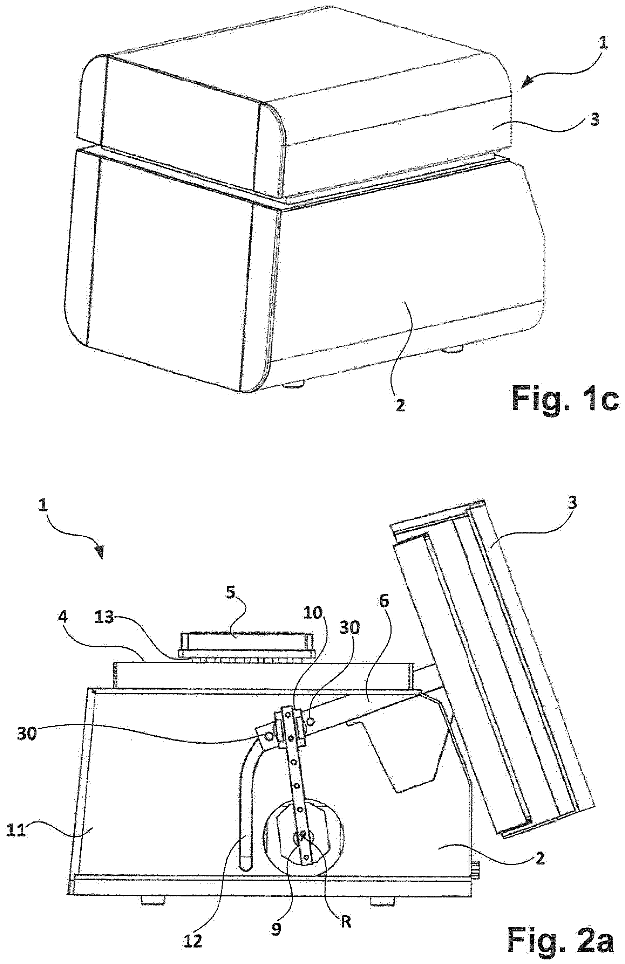

Fig. 1a-c zeigen perspektivische Ansichten der Vorrichtung 1. Sie besitzt eine Basiseinheit 2 und einen Deckel 3, der in den Fig. 1 a-c in verschiedenen Positionen dargestellt ist. Die Basiseinheit 2 weist einen Aufnahmebereich 4 auf, in dem sich ein (in Fig. 1 a-c nicht sichtbarer) Temperierblock befindet. In dem Aufnahmebereich 4 können Reaktionsgefäße angeordnet werden, in denen sich thermisch zu behandelnde, flüssige Proben befinden. In Fig. 1a ist eine im Aufnahmebereich 4 angeordnete, rechteckige Mikrotiterplatte 5 zu sehen, die eine Vielzahl von als Reaktionsgefäße dienende Vertiefungen aufweist. Typischerweise bestehen solche Mikrotiterplatten aus Kunststoff. Der Deckel 3 ist über zwei Verbindungselemente 6, die im vorliegenden Ausführungsbeispiel als Verbindungsarme ausgestaltet sind, mit der Basiseinheit 2 verbunden. Die Verbindungsarme 6 sind mit einem in der Basiseinheit 2 angeordneten, im Folgenden näher zu beschreibenden Deckelantrieb gekoppelt, der den Deckel 3 zum automatischen Öffnen und Schließen der Basiseinheit 2 bewegen kann. In dem Deckel 6 ist eine Abdeckplatte 7 angeordnet, deren zum Aufnahmebereich 4 hin weisende Vorderfläche dazu bestimmt ist, bei verschlossenem Deckel 3 gegen die in der Mikrotiterplatte 5 gebildeten Reaktionsgefäße anzuliegen. Die Abdeckplatte 7 ist im hier beschriebenen Ausführungsbeispiel beheizbar ausgestaltet.

In Fig. 1a befindet sich der Deckel 3 in einer geöffneten ersten Position, in der die Abdeckplatte 7 gegenüber der Oberfläche der Mikrotiterplatte 5 geneigt ist. In dieser Position des Deckels 3 ist ein ungehinderter Zugang zum Aufnahmebereich 4 möglich, z.B. zum Einsetzen oder Herausnehmen der Mikrotiterplatte 5. Dieses Einsetzen und Herausnehmen der Mikrotiterplatte 5 kann beispielsweise mittels eines Roboter-Greifarms erfolgen. In Kombination mit einem solchen Roboter-Bediensystem ist die Vorrichtung 1 vollständig automatisiert betreibbar. In Fig. 1c befindet sich der Deckel 3 in einer geschlossenen zweiten Position. In dieser Position des Deckels 3 liegt die Vorderfläche der Abdeckplatte 7 mit einer vorgebbaren Anpresskraft gegen die Oberfläche der Mikrotiterplatte 5 oder eine die Mikrotiterplatte 5 überdeckende Dichtungsfolie oder Dichtungsmatte an, so dass die Mikrotiterplatte 5 gegen den Temperierblock zur gleichmäßigen Wärmeübertragung angepresst wird.

In Fig. 1b ist eine dritte Position des Deckels 3 dargestellt, die eine Zwischenposition bei der Bewegung des Deckels 3 von der ersten in die zweite Position oder auch bei der Bewegung des Deckels 3 von der zweiten in die erste Position bildet. In dieser dritten Position ist der Deckel 3 parallel zu der Mikrotiterplatte 5 bzw. zum unter der Mikrotiterplatte 5 angeordneten Temperierblock orientiert und von der Oberfläche der Mikrotiterplatte 5 beabstandet.

Die Vorrichtung 1 ist so ausgestaltet, dass eine Bewegung des Deckels 3 aus der ersten, geöffneten Position in die zweite, geschlossene Position über die dritte Position verläuft, d.h. der Deckel 3 wird in einem ersten Bewegungsabschnitt zunächst in einer bogenförmigen Bewegung aus der ersten in die dritte Position gebracht. Aus dieser dritten Position wird der Deckel 3 in einem zweiten Bewegungsabschnitt vertikal, also senkrecht zur Oberfläche der Mikrotiterplatte 5, auf diese zu bewegt und so in die zweite, geschlossene Position gebracht.

Eine Bewegung des Deckels 3 in umgekehrter Richtung, d.h. aus der zweiten, geschlossenen Position in die erste, geöffnete Position erfolgt ebenfalls über die dritte Position, indem in einem ersten Abschnitt dieser Bewegung der Deckel 3 senkrecht zur Oberfläche der Mikrotiterplatte 5 von dieser weg bewegt wird bis er die dritte Position erreicht. In einem darauffolgenden zweiten Bewegungsabschnitt wird der Deckel 3 in einer bogenförmigen Bewegung von der dritten Position in die erste Position gebracht.

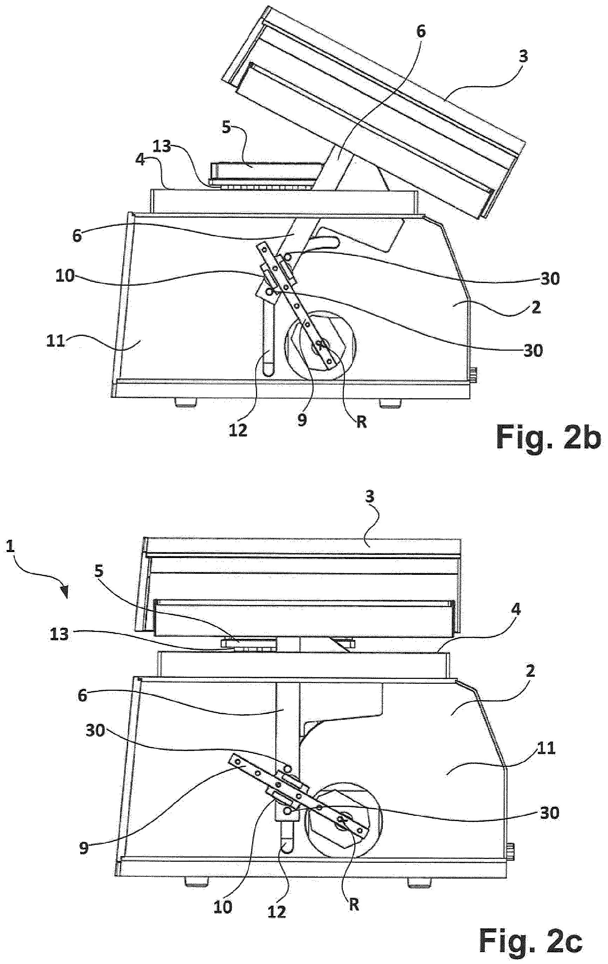

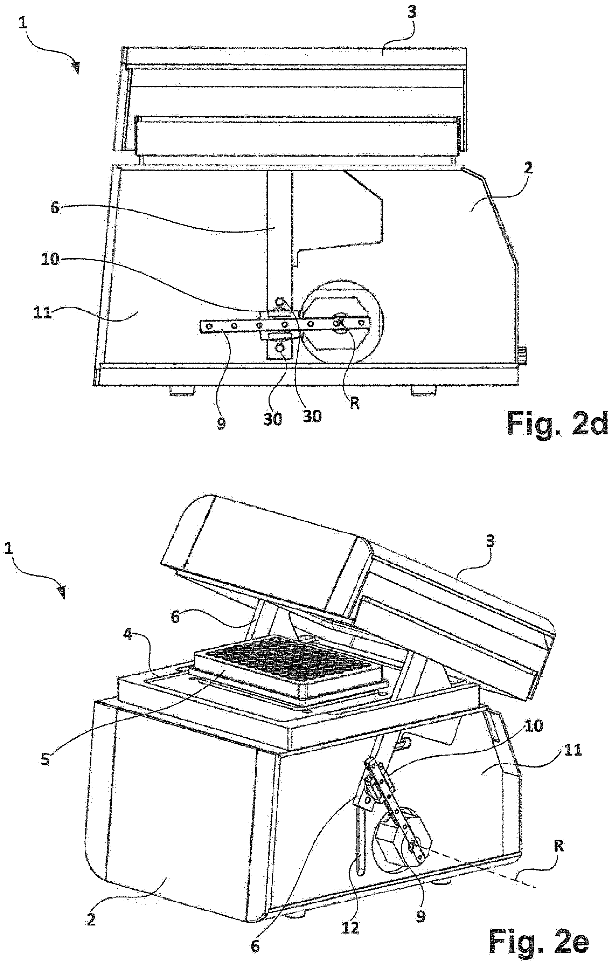

In den Fig. 2a-e ist die Vorrichtung 1 schematisch in einer Schnittdarstellung entlang einer ersten, vertikalen Schnittebene mit verschiedenen Positionen des Deckels 3 gezeigt. In dieser Darstellung ist in Fig. 2 a, b, c und e auch der Temperierblock 13 zu sehen. Der Temperierblock 13 ist aus einem Metall hoher Wärmeleitfähigkeit, z.B. Silber oder Aluminium, gebildet, und weist eine Vielzahl von Aufnahmen für Reaktionsgefäße auf. Im vorliegenden Beispiel ist die Mikrotiterplatte 5 so auf den Temperierblock 13 aufgesetzt, dass die in der Mikrotiterplatte gebildeten, als Reaktionsgefäße dienenden Vertiefungen in die Aufnahmen hineinragen. Die Aufnahmen sind im hier gezeigten Beispiel als Zylinder ausgestaltet, die aufrecht auf einer Basisfläche des Temperierblocks 13 stehen. Alternativ kann der Temperierblock auch im Wesentlichen quaderförmig mit in einer seiner Oberflächen gebildeten Vertiefungen als Aufnahmen für Reaktionsgefäße ausgestaltet sein. In einer weiteren alternativen Ausgestaltung kann der Temperierblock auch eine im Wesentlichen plane Oberfläche ohne Aufnahmen für Reaktionsgefäße aufweisen. Ein solche Temperierblock kann zum Beispiel zur Verwendung mit 1536-Mikrotiterplatten oder In-situ-PCR bestimmt sein. Die Oberfläche des Temperierblocks 13 mit oder ohne Aufnahmen, bzw. deren obere Ränder oder Öffnungen liegen im Wesentlichen in einer horizontalen Ebene, die hier auch als diejenige Ebene bezeichnet wird, in der der Temperierblock 13 orientiert ist. Die Mikrotiterplatte 5 ist im Betrieb der Vorrichtung parallel zu dieser Ebene ausgerichtet. Liegt die Vorderfläche der beheizbaren Abdeckplatte 7 an der Mikrotiterplatte 5 an, ist sie ebenfalls parallel zu dieser Ebene ausgerichtet.

Der Temperierblock 13 ist mittels einer Temperaturregelungseinrichtung heiz- und kühlbar. Er kann somit in schneller Abfolge Temperaturzyklen für die Durchführung von Polymerase-Kettenreaktionen durchlaufen. Die Temperaturregelungseinrichtung ist in herkömmlicher Weise ausgestaltet und wird deshalb hier nicht näher beschrieben.

In der Basiseinheit 2 ist ein Deckelantrieb 8 für die Bewegung des Deckels 3 angeordnet. Der Deckelantrieb 8 ist mit den Verbindungselementen 6 jeweils über eine Kopplungseinrichtung gekoppelt, die im Folgenden näher beschrieben wird. In der in Fig. 2a-e gezeigten Schnitt-Darstellung ist nur eine der Kopplungseinrichtungen zu sehen, die den Deckelantrieb 8 mit einem der Verbindungselemente 6 koppelt. Auf der gegenüberliegenden Seite der Basiseinheit ist eine ganz analog (symmetrisch zur hier dargestellten Kopplungseinrichtung) ausgestaltete Kopplungseinrichtung angeordnet, die den Deckelantrieb 8 mit dem auf der gegenüberliegenden Seite des Deckels angeordneten zweiten Verbindungselement 6 koppelt. Im Folgenden wird die sichtbare Kopplungseinrichtung beschrieben.

Der Deckelantrieb 8 umfasst einen Motor (in Fig. 2a-e nicht sichtbar) und eine um eine (gedachte) Rotationsachse R drehbare Antriebswelle (in Fig. 2a-e nicht sichtbar). Die Antriebswelle ist starr mit dem senkrecht zur Rotationsachse R verlaufenden Hebelarm 9 verbunden. An dem Verbindungselement 6 ist eine Linearführung 10 angeordnet, in der der Hebelarm 9 geführt ist. Die Linearführung 10 ist um eine parallel zur Rotationsachse R verlaufende (gedachte) zweite Rotationsachse drehbar an dem Verbindungselement 6 befestigt.

In der Basiseinheit 2 ist eine Führungsplatte 11 angeordnet, die senkrecht zu der Rotationsachse R der Antriebswelle orientiert ist. In der Führungsplatte 11 ist ein Führungsschlitz 12 gebildet, der einen ersten, bogenförmigen, und einen zweiten, linearen und senkrecht zu der Mikrotiterplatte 5 ausgerichteten, Abschnitt aufweist. Die durch den Deckelantrieb 8 bewirkte Bewegung des Verbindungselements 6 ist in dem Führungsschlitz 12 in der Führungsplatte 11 geführt. Hierzu weist das Verbindungselement 6 zwei Stifte 30 auf, die in dem Führungsschlitz 12 geführt sind. Wie erwähnt befindet sich eine spiegelbildliche Kopplungsvorrichtung auf der gegenüberliegenden Seite des Deckelantriebs 8 in der Basiseinheit, um die Bewegung des anderen Verbindungselements 6 anzutreiben und zu führen. Anstelle der hier beschriebenen Führungen sind andere Mechanismen einsetzbar, die eine Rotationsbewegung der Antriebswelle in eine Linearbewegung der Verbindungselemente 6 umsetzen.

In Fig. 2a befindet sich der Deckel 3 in der ersten, geöffneten Position. Dabei befinden sich die Stifte 30 des Verbindungselements 6 an einem ersten Ende des Führungsschlitzes 12. Eine Drehung der Antriebswelle um die Rotationsachse R bewirkt über die Führung des Hebelarms 9 in der Linearführung 10 eine Bewegung der Stifte entlang des bogenförmigen Abschnitts des Führungsschlitzes 12. Diese Bewegung resultiert in einer Schwenkbewegung des Deckels 3 über die in Fig. 2b dargestellte Position, bei der die Neigung des Deckels 3 bzw. der darin angeordneten Abdeckplatte 7 gegenüber der Ebene, in der der Temperierblock 13 angeordnet ist, immer geringer wird, bis der Deckel 3 und die Abdeckplatte 7 parallel zu dieser Ebene bzw. zur Mikrotiterplatte 5 ausgerichtet, aber noch von der Mikrotiterplatte 5 beabstandet sind. Damit ist der erste Bewegungsabschnitt beendet, und die dritte Position des Deckels 3 erreicht, Fig. 2c. Die weitere Bewegung der Antriebswelle bewirkt über die Linearführung 10 eine lineare Abwärtsbewegung des Verbindungselements 6 im Führungsschlitz 12, so dass sich der Deckel 3 und die darin angeordnete Abdeckplatte 7 parallel zu der Mikrotiterplatte 5 ausgerichtet in senkrechter Richtung auf die Mikrotiterplatte 5 zu bewegt, bis die Vorderfläche der Abdeckplatte 7 auf der Mikrotiterplatte 5 anschlägt. Dabei werden idealerweise keinerlei horizontale Kraftkomponeten (Scherkräfte) auf die Mikrotiterplatte 5 ausgeübt.

Durch eine weitere Rotationsbewegung der Antriebswelle wird eine Anpresskraft der Vorderfläche der Abdeckplatte 7 gegen die Mikrotiterplatte 5 bewirkt. Dieser ist durch das Drehmoment der Antriebswelle bzw. durch die Kraft, die entsprechend über die Kopplungseinrichtung von dem Deckelantrieb 8 auf die Verbindungselemente 6 ausgeübt wird, vorgebbar. Liegt die Abdeckplatte 7 mit dem vorgegebenen Anpressdruck gegen die Mikrotiterplatte 5 an, ist die zweite Position des Deckels 3 (Fig. 2d) erreicht.

Die Rotationsbewegung der Antriebswelle in die entgegengesetzte Richtung bewirkt eine entsprechend in umgekehrter Richtung verlaufende, in dem Führungsschlitz 12 geführte Bewegung des Deckels 3 mit der Abdeckplatte 7 von der zweiten Position über die dritte Position in die erste Position.

Alternative Ausgestaltungen der Kopplungseinheit zwischen dem Deckelantrieb 8 und den Verbindungselementen 6 bzw. dem Deckel 3 sind denkbar. So kann beispielsweise statt der Linearführung 10 für den Hebelarm 9 auch eine Kombination aus einem Führungsschlitz und einem Langloch zur Kopplung des Hebelarms 9 mit dem Verbindungselement 6 verwendet werden.

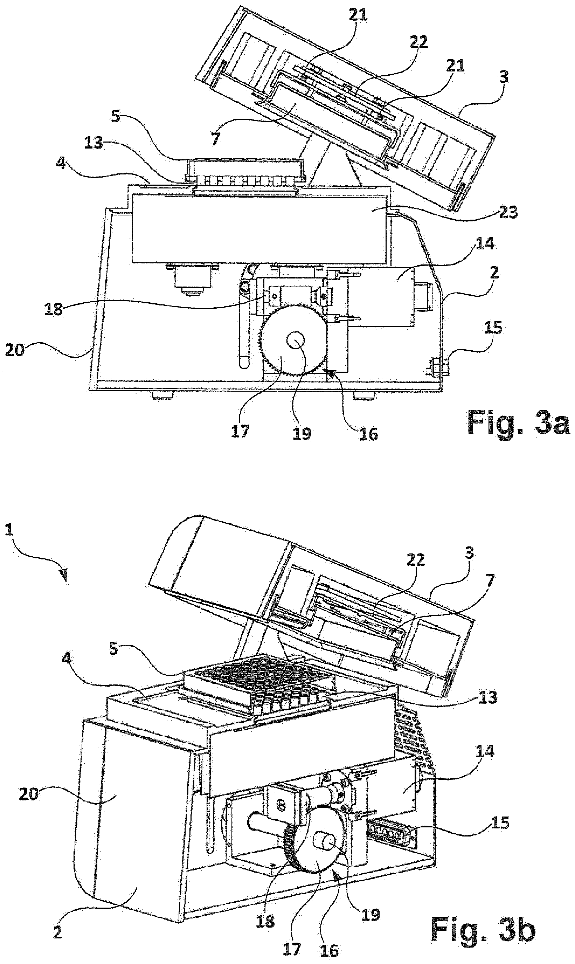

In Fig. 3a und b sind weitere schematische Schnittdarstellungen der Vorrichtung 1 gezeigt, wobei die hier betrachtete zweite Schnittebene parallel zu der ersten, in Fig. 2a-e verwendeten Schnittebene verläuft. In diesen Schnittdarstellungen ist der Deckelantrieb 8 genauer zu sehen. Der Deckelantrieb 8 umfasst einen steuerbaren Motor 14, z.B. einen Elektromotor, der mit einer in der Basiseinheit selbst oder außerhalb der Basiseinheit vorgesehenen Antriebssteuerung verbindbar ist. Zur Verbindung des Motors 14 oder der internen Antriebssteuerung mit einer externen Antriebssteuerung ist in der Basiseinheit eine Schnittstelle 15 vorgesehen. Der Deckelantrieb 8 umfasst im vorliegenden Beispiel weiter ein von dem Motor 14 betätigbares, vorzugsweise selbsthemmendes, Getriebe 16. Im vorliegenden Ausführungsbeispiel ist das Getriebe 16 als Schneckengetriebe ausgestaltet, es sind jedoch auch andere Ausgestaltungen möglich, die die Drehbewegung einer Antriebswelle bewirken können. Das Getriebe 16 weist im vorliegenden Beispiel eine Zahnrad 17 (Schneckenrad) und eine schraubenförmige Schneckenwelle 18 auf, deren Drehbewegung das Zahnrad 17 in Rotation versetzt. Das Zahnrad 17 ist starr mit der oben bereits im Zusammenhang mit den Fig. 2a-e erwähnten Antriebswelle 19 verbunden, die über den Hebelarm 9, die Linearführung 10 und das in dem Führungsschlitz 12 geführte Verbindungselement 6 die Bewegung des Deckels 3 antreibt.

Zur Steuerung des Deckelantriebs 8 kann, wie erwähnt, eine über die Schnittstelle 15 mit dem Motor 14 verbundene externe Antriebssteuerung vorgesehen sein. Es ist aber auch möglich, dass die Antriebssteuerung mindestens teilweise in der Basiseinheit 2 angeordnet ist, z.B. in Form einer auf einer in der Basiseinheit 2 angeordneten Platine realisierten Schaltung. Die Antriebssteuerung umfasst mindestens einen Prozessor, Speicherelemente und ein oder mehrere Betriebsprogramme, die in einem oder mehreren der Speicherelemente abgelegt sind und vom Prozessor ausführbar sind. Das oder die Betriebsprogramme dienen zum Betrieb und zur Steuerung der Vorrichtung 1, beispielsweise zur Steuerung des Deckelantriebs 8. Die Antriebssteuerung kann mittels eines Betriebsprogramms dazu eingerichtet sein, eine Kennung eines in den Aufnahmebereich 4 einzusetzenden Reaktionsgefäßes, z.B. einer Mikrotiterplatte 5, einzulesen, anhand der Kennung eine für das spezielle Reaktionsgefäß geeignete Andruckkraft zu ermitteln, mit der die Abdeckplatte 7 gegen das Reaktionsgefäß anliegen soll, wenn sich der Deckel 3 in der zweiten Position befindet, und den Deckelantrieb 8 zum Anlegen der ermittelten Andruckkraft zu steuern.

Die vordere Gehäusewand 20 des Gehäuses der Basiseinheit 2 ist abnehmbar ausgestaltet. Auf diese Weise ist die Schneckenwelle 18, für eine Notentriegelung von außen zugänglich. Für den Fall, dass der Deckel 3 automatisch nicht geöffnet werden kann, z.B. bei einem Defekt, ist es möglich, die Schneckenwelle 18, beispielsweise mittels eines Schraubendrehers, manuell zu betätigen und so auf manuellem Weg den Deckel zu öffnen, um an die Mikrotiterplatte 5 und die darin enthaltenen Proben zu gelangen.

In den Schnittdarstellungen der Fig. 3a und b ist auch der Aufbau des Deckels 3 im Detail zu sehen. Der Deckel 3 enthält, wie beschrieben, die mittels eines Heizmoduls beheizbare Abdeckplatte 7. Diese ist über Druckfedern 21 mit einem Andruckblech 22 gekoppelt, das seinerseits starr mit den Verbindungselementen 6 verbunden ist. Über die Druckfedern 21 wird die vom Deckelantrieb 8 auf die Verbindungselemente 6 ausgeübte Kraft auf die Abdeckplatte 7 übertragen. Das Heizmodul ist in herkömmlicher Weise ausgestaltet und kann über die Schnittstelle 15 der Basiseinheit 2 an eine Energieversorgung angeschlossen werden.

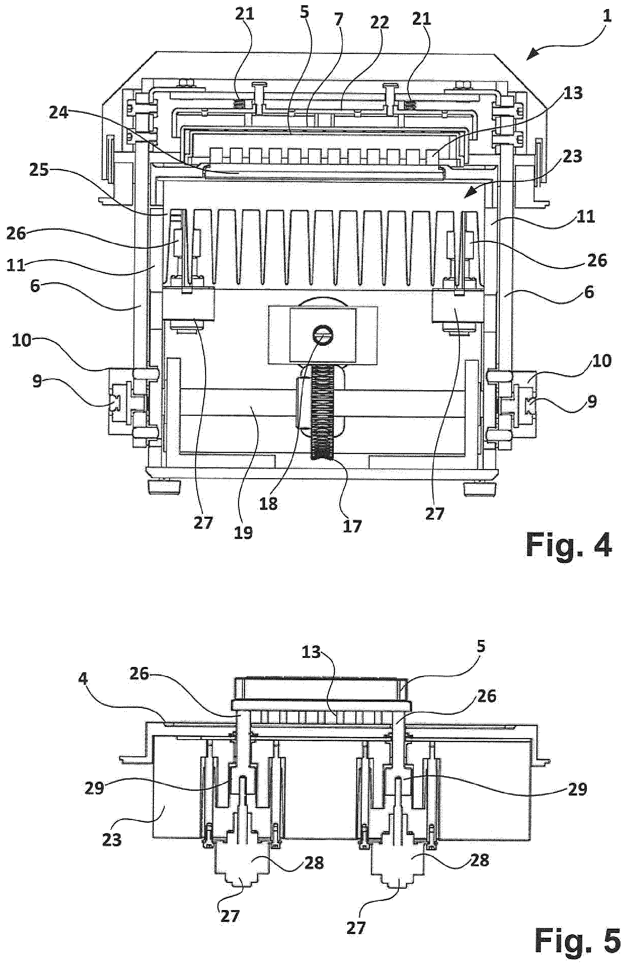

In den Schnittdarstellungen der Fig. 3a und b ist auch ein Teil des Temperierblockmoduls 23 dargestellt, auf das der Temperierblock 13 montiert ist. Dieses wird näher anhand der Fig. 4 sowie Fig. 5 beschrieben werden.

Fig. 4 zeigt eine schematische Längsschnitt-Darstellung der Vorrichtung 1 bei geschlossenem Deckel (Position 2) entlang einer dritten Schnittebene, die senkrecht zu der ersten (Fig. 2a-e) und zweiten (Fig. 3a, b) Schnittebene verläuft. In dieser Darstellung ist zu sehen, dass die Kopplungseinrichtung zwischen dem Getriebe 16 und den Verbindungselementen 6 spiegelsymmetrisch bezüglich einer durch das Zahnrad 17 des Getriebes 16 verlaufenden (gedachten) Symmetrieebene ausgestaltet ist. Jedes der Verbindungselemente 6 ist mithin mit der Antriebswelle 19 über einen in einer Linearführung 10 geführten Hebelarm 9 gekoppelt, wobei die Bewegung der Verbindungselemente 6 jeweils durch zwei in einem Führungsschlitz einer Führungsplatte 11 beweglichen, mit jeweils einem der Verbindungselemente 6 fest verbundenen Stiften 30 geführt ist.

Das Temperierblockmodul 23 mit dem Temperierblock 13 ist im oberen Bereich der Basiseinheit 2 angeordnet. Es umfasst unterhalb des Temperierblocks 13 angeordnete Temperierelemente 24, z.B. Peltier-Elemente und eine auf der von dem Temperierblock 13 abgewandten Seite der Temperierelemente 24 angeordnete Wärmesenke 25. In der Basiseinheit 2 kann eine Steuerung vorgesehen sein, die die Temperierelemente 24 zum Durchfahren vorgegebener Temperaturverläufe, z.B. von Temperaturzyklen für die Durchführung von Polymerase-Kettenreaktionen oder zur Inkubation, steuert oder regelt. Die Temperatursteuerung kann auch mindestens teilweise in einem externen, über die Schnittstelle 15 mit den Temperierelementen verbundenen Controller realisiert sein. In dem Temperierblockmodul 23 sind außerdem im vorliegenden Ausführungsbeispiel vier Auswurfstößel 26 angeordnet, denen jeweils ein eigener Stößelantrieb 27 zugeordnet ist. Selbstverständlich ist auch eine andere Anzahl von Auswurfstößeln denkbar.

In Fig. 5 ist das Temperierblockmodul 23 mit dem Temperierblock 13, der darauf aufgesetzten Mikrotiterplatte 5 und zweien der vier Auswurfstößel 25 näher in einer Längsschnittdarstellung gezeigt. In dieser Darstellung sind die Temperierelemente der Übersichtlichkeit halber weggelassen.

Die Auswurfstößel 26 können mittels der Stößelantriebe 27 in senkrechter Richtung zur Ebene des Temperierblocks 13 bzw. zur Mikrotiterplatte 5 zwischen einer aus dem Temperierblockmodul 23 herausgefahrenen ersten Endstellung (Fig. 5) und einer in das Temperierblockmodul 23 zurückgezogenen zweiten Endstellung hin- und herbewegt werden. Die Auswurfstößel 26 sind an der Peripherie des Temperierblocks 13 angeordnet, derart, dass die Auswurfstößel 26 bei der Bewegung aus der zurückgezogenen Stellung in die herausgefahrene Stellung an die Unterseite der Mikrotiterplatte 5 anschlagen und die Mikrotiterplatte 5 bei ihrer weiteren Aufwärtsbewegung mitnehmen. Ist die herausgefahrene Endstellung der Auswurfstößel erreicht, ist die mitgenommene Mikrotiterplatte 5 derart vom Temperierblock 13 abgehoben, dass ein automatisiert betriebener Roboter-Greifarm sie leicht erfassen kann. Im vorliegenden Ausführungsbeispiel sind die Auswurfstößel 26 an den Ecken der rechteckigen Grundfläche des Temperierblocks 13 angeordnet. Es ist möglich, zusätzliche Auswurfstößel entlang der Seiten der Grundfläche vorzusehen oder nur an den Seiten Auswurfstößel vorzusehen. Selbstverständlich sind auch andere als rechteckige Grundflächen für den Temperierblock 13 denkbar. Die Auswurfstößel werden dann entsprechend an geeigneten Positionen entlang der Peripherie des Temperierblocks 13 angeordnet.

Die Stößelantriebe 27 können als Elektroantriebe, aber auch als Pneumatik- oder Hydraulik-Antriebe ausgestaltet sein. Im vorliegenden Beispiel umfassen die Stößelantriebe 27 jeweils einen von der Antriebssteuerung individuell steuerbaren Elektromotor 28, der über eine eine Rotationsbewegung in eine Linearbewegung umsetzende Spindel 29 mit dem Auswurfstößel 26 gekoppelt ist.

Die Antriebssteuerung ist dazu ausgestaltet, jeden Stößelantrieb 27 individuell zu steuern. Damit ist es möglich, verschiedene Bewegungsmuster der Auswurfstößel 26 zu realisieren. Zum Beispiel können die Auswurfstößel 26 synchron bewegt werden, um die Mikrotiterplatte 5 während der Auswurfbewegung permanent in exakt waagerechter Orientierung zu halten. Während der thermischen Behandlung der Probe kann das Kunststoff-Material der Mikrotiterplatte 5 am Temperierblock 13 teilweise zu fließen beginnen und an den Aufnahmen des Temperierblocks 13 "anbacken". Um die flüssigkeitsgefüllten Reaktionsgefäße ohne allzu große Erschütterungen aus den Aufnahmen zu lösen, kann die Antriebssteuerung vorteilhaft dazu eingerichtet sein, die Stößelantriebe 27 derart anzusteuern, dass sie abwechselnd die ausgefahrene Stellung erreichen, so dass die Mikrotiterplatte 5 in einer pulsierenden oder wellenartigen Bewegung von dem Temperierblock 13 abgehoben wird. Damit werden ruckartige Bewegungen vermieden, die zur Folge hätten, dass in den einzelnen Reaktionsgefäßen enthaltene Flüssigkeit eine die Reaktionsgefäße verschließende Dichtungsmatte oder Dichtungsfolie benetzt und an dieser haften bleibt, und somit für die weitere Verwendung der Proben verloren ist.

Die Antriebssteuerung ist in dem hier beschriebenen, sehr vorteilhaften Ausführungsbeispiel sowohl zur Steuerung des Deckelantriebs 8 für die Bewegung des Deckels 3 als auch zur Steuerung der Stößelantriebe 27 ausgestaltet. Die Antriebssteuerung kann in diesem Fall dazu ausgestaltet sein, die Bewegung des Deckels und die Bewegung der Auswurfstößel 26 nach einem vorgegebenen Betriebsprogramm aufeinander abzustimmen. So kann die Antriebssteuerung beim Anheben des Deckels 3 aus der zweiten Position in die dritte Position gleichzeitig die Auswurfstößel 26 in die ausgefahrene Stellung fahren, so dass die Mikrotiterplatte während sie von dem Temperierblock 13 abgehoben wird, gegen die Vorderfläche der Abdeckplatte angepresst bleibt. Somit bleiben die Reaktionsgefäße während des Abhebens der Mikrotiterplatte 5 mittels der Abdeckplatte 7 dicht verschlossen und gegenüber ruckartigen Bewegungen beim Ablösen der Mikrotiterplatte vom Temperierblock gesichert.

Die hier beschriebene Vorrichtung ist zur automatischen Betätigung geeignet, stellt eine hohe Betriebssicherheit zur Verfügung und ist dabei platzsparend und einfach aufgebaut.

### Bezugszeichen

- 1: Vorrichtung
- 2: Basiseinheit
- 3: Deckel
- 4: Aufnahmebereich
- 5: Mikrotiterplatte
- 6: Verbindungselemente
- 7: Abdeckplatte
- 8: Deckelantrieb
- 9: Hebelarm
- 10: Linearführung
- 11: Führungsplatte
- 12: Führungsschlitz
- 13: Temperierblock
- 14: Motor
- 15: Schnittstelle
- 16: Getriebe
- 17: Zahnrad
- 18: Schneckenwelle
- 19: Antriebswelle
- 20: vordere Gehäusewand
- 21: Druckfedern
- 22: Andruckblech
- 23: Temperierblockmodul
- 24: Temperierelemente
- 25: Wärmesenke
- 26: Auswurfstößel
- 27: Stößelantrieb
- 28: Elektromotor
- 29: Spindel
- 30: Stift

- R: Rotationsachse der Antriebswelle

## Patentansprüche

1. Vorrichtung (1) zur thermischen Behandlung von Proben, umfassend:
eine Basiseinheit (2), die einen Aufnahmebereich (4) zum Aufnehmen eines oder mehrerer Reaktionsgefäße aufweist;
einen in dem Aufnahmebereich (4) angeordneten Temperierblock (13);
einen Deckel (3) zum Schließen des Aufnahmebereichs (4), der von einer ersten, geöffneten, Position in eine zweite, geschlossene, Position bewegbar ist, wobei der Deckel (3) eine Abdeckplatte (7) enthält, die eine Vorderfläche aufweist, wobei die Vorderfläche dazu ausgestaltet ist, gegen auf den Temperierblock (13) aufgesetzte Reaktionsgefäße eine vorgegebene Anpresskraft auszuüben, wenn sich der Deckel (3) in der zweiten Position befindet;
mindestens ein mit dem Deckel (3) verbundenes Verbindungselement (6);
genau einen in der Basiseinheit (2) angeordneten Deckelantrieb (8), der mit dem mindestens einen Verbindungselement (6) gekoppelt ist, um eine Bewegung des Deckels (3) von der ersten in die zweite Position und/oder von der zweiten in die erste Position anzutreiben;
wobei der Deckelantrieb (8) derart mit dem mindestens einen Verbindungselement (6) gekoppelt ist, dass der Deckel (3) mit der Abdeckplatte (7) bei der Bewegung von der ersten in die zweite Position in einem ersten Bewegungsabschnitt von der ersten Position zunächst in eine dritte Position gebracht wird, in der die Vorderfläche der Abdeckplatte (7) parallel zu dem Temperierblock (13) verläuft und von diesem beabstandet ist, und wobei der Deckel (3) und die Abdeckplatte (7) in einem darauffolgenden zweiten Bewegungsabschnitt in Richtung einer gemeinsamen Normalen der Vorderfläche und einer Ebene, in der der Temperierblock (13) angeordnet ist, auf die Basiseinheit (2) zu bewegt werden, bis der Deckel (3) die zweite Position erreicht hat,
**dadurch gekennzeichnet, dass**
in der ersten Position des Deckels (3) die Vorderfläche der Abdeckplatte (7) gegenüber dem Temperierblock (13) geneigt ist.

2. Vorrichtung (1) nach Anspruch 1,
wobei der Deckelantrieb (8) zur Einstellung der senkrecht zu der Vorderfläche der Abdeckplatte (7) wirkenden Anpresskraft, die der Deckelantrieb (8) während des zweiten Bewegungsabschnitts über die Verbindungselemente (6) auf den Deckel (3) und die Abdeckplatte (7) ausübt, steuerbar ist.

3. Vorrichtung (1) nach einem der Ansprüche 1 oder 2,
wobei der Deckelantrieb (8) einen Motor (14), insbesondere einen Elektromotor, aufweist, und wobei die Vorrichtung (1) weiter eine mit dem Deckelantrieb (8) verbundene oder verbindbare Antriebssteuerung umfasst, die dazu eingerichtet ist, insbesondere anhand einer Vorgabe durch einen Benutzer oder eine mit der Antriebssteuerung verbundene übergeordnete Steuerung, die Kraft einzustellen, die der Deckelantrieb (8) über das mindestens eine Verbindungselement auf den Deckel (3) und die Abdeckplatte (7) ausübt.

4. Vorrichtung (1) nach Anspruch 3,
wobei die Antriebssteuerung und/oder die übergeordnete Steuerung dazu eingerichtet ist, anhand einer vorgegebenen Kennung eines oder mehrerer in der Basiseinheit (2) aufgenommenen Reaktionsgefäße ein die einzustellende Kraft repräsentierendes Steuersignal zu erzeugen und auszugeben.

5. Vorrichtung (1) nach einem der Ansprüche 1 bis 4,
wobei das mindestens eine Verbindungselement mit einer in der Basiseinheit (3) angeordneten Führung gekoppelt ist, derart, dass die Bewegung des mindestens einen Verbindungselements (6) während des zweiten Bewegungsabschnitts linear in zur Abdeckplatte (7) senkrechter Richtung geführt ist.

6. Vorrichtung (1) nach Anspruch 5,
wobei ein Abschnitt der Führung, der die Bewegung des mindestens einen Verbindungselements (6) während des zwischen der dritten und der zweiten Position verlaufenden zweiten Bewegungsabschnitts führt, senkrecht zu der Ebene, in der der Temperierblock (13) angeordnet ist, verläuft.

7. Vorrichtung (1) nach einem der Ansprüche 1 bis 6,
wobei der Deckelantrieb (8) eine drehbare Antriebswelle (19) umfasst, die starr mit mindestens einem sich senkrecht zu der Antriebswelle (19) erstreckenden Hebelarm (9) verbunden ist, wobei der Hebelarm (9) über eine Führung (10) mit dem mindestens einen Verbindungselement (6) gekoppelt ist.

8. Vorrichtung (1) nach Anspruch 7,
wobei die Führung (10) eine drehbar am mindestens einen Verbindungselement (6) gelagerte Linearführung für den Hebelarm (9) ist, oder
wobei die Führung gebildet ist durch einen in dem Hebelarm oder dem mindestens einen Verbindungselement angeordneten Führungsschlitz und mindestens einen in dem Führungsschlitz beweglichen Stift.

9. Vorrichtung (1) nach einem der Ansprüche 1 bis 8,
wobei eine Bewegung des mindestens einen Verbindungselements (6) während des ersten und zweiten Bewegungsabschnitts in einer in der Basiseinheit (2) angeordneten Führung geführt ist.

10. Vorrichtung (1) nach Anspruch 9,
wobei das mindestens eine Verbindungselement (6) mindestens ein Kopplungselement, beispielsweise einen Stift (30), aufweist, und wobei die Führung eine in der Basiseinheit angeordnete Führungsplatte (11) umfasst, die einen Führungsschlitz (12) aufweist, in dem das Kopplungselement geführt ist.

11. Vorrichtung (1) nach einem der Ansprüche 1 bis 10,
umfassend zwei an einander gegenüberliegenden Seiten des Deckels (3) befestigte Verbindungselemente (6).

12. Vorrichtung (1) nach einem der Ansprüche 1 bis 11,
wobei der Deckelantrieb (8) ein selbsthemmendes Getriebe (16), insbesondere ein Schneckengetriebe, umfasst.

13. Vorrichtung (1) nach einem der Ansprüche 1 bis 12,
wobei die Basiseinheit (2) ein Gehäuse umfasst, das mindestens eine, beispielsweise durch eine Tür oder eine abnehmbare Wandung (20), verschließbare Öffnung aufweist, die einen Zugang zum manuellen Betätigen des Deckelantriebs (8) erlaubt.

14. Vorrichtung (1) nach einem der Ansprüche 1 bis 13,
wobei die Basiseinheit (2) einen mit einem oder mehreren Motoren (28) automatisch betätigbaren Auswurfmechanismus umfasst, der dazu dient, in dem Temperierblock (13) angeordnete Reaktionsgefäße in Richtung einer Normalen der Ebene, in der der Temperierblock (13) angeordnet ist, zu bewegen.

15. Vorrichtung (1) nach Anspruch 14,
wobei der Temperierblock (13) auf oder in einem Temperierblockmodul (23) angeordnet ist, das in der Basiseinheit (2) befestigt ist, und wobei der Auswurfmechanismus mindestens einen Auswurfstößel (26) umfasst, der in dem Temperierblockmodul (23) senkrecht zu der Ebene, in der der Temperierblock (13) angeordnet ist, beweglich gelagert ist, und wobei die Vorrichtung (1) weiter zum Antrieb von Bewegungen des Auswurfstößels (26) mindestens einen an der Unterseite des Temperierblockmoduls angeordneten Stößelantrieb (27) umfasst, und wobei jedem Auswurfstößel (26) ein eigener, insbesondere individuell steuerbarer, Stößelantrieb (27) zugeordnet ist.

## Claims

1. Apparatus (1) for the thermal treatment of probes, comprising:
a base unit (2) which has a reception area (4) to receive one or more reaction vessels;
a temperature regulation block (13) arranged in the reception area (4);
a lid (3) designed to close the reception area (4), wherein said lid can be moved from a first open position to a second closed position, wherein the lid (3) contains a cover plate (7) which has a front surface which is designed to exert a predefined contact force on the reaction vessels placed on the temperature regulation block (13) when the lid (3) is in the second position;
at least a connection element (6) connected to the lid (3);
exactly one lid drive (8) arranged in the base unit (2), and coupled with the at least one connection element (6), for the purpose of driving a movement of the lid (3) from the first to the second position and/or from the second to the first position;
wherein the lid drive (8) is coupled to the at least one connection element (6) in such a way that during the movement from the first to the second position the lid (3) with the cover plate (7) is first moved - in a first movement phase - from the first position to a third position in which the front surface of the cover plate (7) is parallel to the temperature regulation block (13) and is spaced at a distance from said block, and wherein, in a subsequent second movement phase, the lid (3) and the cover plate (7) are moved towards the base unit (2) in the direction of a common normal of the front surface and a plane in which the temperature regulation block (13) is arranged, until the lid (3) has reached the second position,
**characterized in that**
the front surface of the cover plate (7) is inclined in relation to the temperature regulation block (13) in the first position of the lid (3).

2. Apparatus (1) as claimed in Claim 1,
wherein the lid drive (8) can be regulated to set the contact pressure acting perpendicularly to the front surface of the cover plate (7), which the lid drive (8) exerts on the lid (3) and the cover plate (7) by means of the connection elements (6) during the second movement phase.

3. Apparatus (1) as claimed in one of the Claims 1 or 2,
wherein the lid drive (8) comprises a motor (14), particularly an electric motor, and wherein said apparatus (1) further comprises a drive controller which is connected or can be connected to the lid drive (8), wherein said drive controller is designed to regulate, particularly on the basis of a specification by a user or a higher-order controller connected to the drive controller, the force that the lid drive (8) exercises on the lid (3) and the cover plate (7) by means of the at least one connection element.

4. Apparatus (1) as claimed in Claim 3,
wherein the drive controller and/or the higher-level controller is designed to generate and emit a control signal representing the force to be set on the basis of a predefined ID of one or more reaction vessels accommodated in the base unit (2).

5. Apparatus (1) as claimed in one of the Claims 1 to 4,
wherein the at least one connection element is coupled to a guide arranged in the base unit (3) in such a way that the movement of the at least one connection element (6) during the second movement phase is guided linearly in the direction that is perpendicular to the cover plate (7).

6. Apparatus (1) as claimed in Claim 5,
wherein a section of the guide that guides the movement of the least one connection element (6) during the second movement phase extending between the third and the second position is perpendicular to the plane in which the temperature regulation block (13) is arranged.

7. Apparatus (1) as claimed in one of the Claims 1 to 6,
wherein the lid drive (8) comprises a rotatable drive shaft (19) which is rigidly connected to at least a lever arm (9) extending perpendicular to the drive shaft (19), wherein the lever arm (9) is coupled to the at least one connection element (6) via a guide (10).

8. Apparatus (1) as claimed in Claim 7,
wherein the guide (10) is a linear guide for the lever arm (9) pivot-mounted on the at least one connection element (6), or
wherein the guide is formed by a guide slot, arranged in the lever arm or the at least one connection element, and least one movable pin in the guide slot.

9. Apparatus (1) as claimed in one of the Claims 1 to 8,
wherein a movement of the at least one connection element (6) during the first and the second movement phase is guided in a guide arranged in the base unit (2).

10. Apparatus (1) as claimed in Claim 9,
wherein the at least one connection element (6) comprises at least a coupling element, for example a pin (30), and
wherein the guide comprises a guide plate (11) arranged in the base unit and having a guide slot (12) in which the coupling element is guided.

11. Apparatus (1) as claimed in one of the Claims 1 to 10,
comprising two connection elements (6) fixed on opposite sides of the lid (3).

12. Apparatus (1) as claimed in one of the Claims 1 to 11,
wherein the lid drive (8) comprises a self-locking gear (16), particularly a worm gear.

13. Apparatus (1) as claimed in one of the Claims 1 to 12,
wherein the base unit (2) comprises a housing which has at least an opening that can be sealed, for example by a door or a removable wall (20), wherein said opening allows access to the manual operation of the lid drive (8).

14. Apparatus (1) as claimed in one of the Claims 1 to 13,
wherein the base unit (2) comprises an ejection mechanism which can be automatically operated with one or more motors (28) and which serves to move the reaction vessels arranged in the temperature regulation block (13) in the direction of a normal of the plane in which the temperature regulation block (13) is arranged.

15. Apparatus (1) as claimed in one of the Claims 14,
wherein the temperature regulation block (13) is arranged on or in a temperature regulation block module (23), which is secured in the base unit (2), and wherein the ejection mechanism comprises at least an ejection tappet (26) which is pivot-mounted in the temperature regulation block module (23) perpendicularly to the plane in which the temperature regulation block (13) is arranged, and wherein the apparatus (1) further comprises at least a tappet drive (27) which is arranged on the underside of the temperature regulation block module for the purpose of driving the movements of the ejection tappet (26), and wherein each ejection tappet (26) is assigned a dedicated tappet drive (27), particularly one that can be individually controlled.

## Revendications

1. Dispositif (1) destiné au traitement thermique de sondes, comprenant :
une unité de base (2) présentant une zone de réception (4) pour recevoir un ou plusieurs récipients de réaction ;
un bloc de régulation de température (13) disposé dans la zone de réception (4) ;
un couvercle (3) destiné à fermer la zone de réception (4), lequel couvercle est mobile d'une première position ouverte à une deuxième position fermée, le couvercle (3) contenant une plaque de recouvrement (7) qui présente une surface avant, la surface avant étant conçue pour exercer une force de contact prédéfinie contre les récipients de réaction placés sur le bloc de régulation de température (13) lorsque le couvercle (3) est dans la deuxième position ;
au moins un élément de liaison (6) relié au couvercle (3) ;
précisément un entraînement de couvercle (8) disposé dans l'unité de base (2) et couplé à l'au moins un élément de liaison (6), afin d'entraîner un mouvement du couvercle (3) de la première à la deuxième position et/ou de la deuxième à la première position ;
l'entraînement de couvercle (8) étant couplé à l'au moins un élément de liaison (6) de telle sorte que le couvercle (3) avec la plaque de recouvrement (7), pendant le mouvement de la première à la deuxième position, est d'abord amené dans une première phase de mouvement de la première position à une troisième position dans laquelle la surface avant de la plaque de recouvrement (7) s'étend parallèlement au bloc de régulation de température (13) et est espacée de celui-ci, et le couvercle (3) et la plaque de recouvrement (7) étant déplacés dans une deuxième phase de mouvement suivante vers l'unité de base (2), dans la direction d'une normale commune de la surface avant et d'un plan dans lequel le bloc de régulation de température (13) est disposé, jusqu'à ce que le couvercle (3) ait atteint la deuxième position,
**caractérisé**
**en ce que** dans la première position du couvercle (3), la surface avant de la plaque de recouvrement (7) est inclinée par rapport au bloc de régulation de température (13).

2. Dispositif (1) selon la revendication 1,
pour lequel l'entraînement de couvercle (8) peut être commandé pour régler la pression de contact agissant perpendiculairement à la surface avant de la plaque de recouvrement (7), que l'entraînement de couvercle (8) exerce sur le couvercle (3) et la plaque de recouvrement (7) par l'intermédiaire des éléments de liaison (6) pendant la deuxième phase de mouvement.

3. Dispositif (1) selon l'une des revendications 1 ou 2,
pour lequel l'entraînement de couvercle (8) comprend un moteur (14), notamment un moteur électrique, lequel dispositif (1) comprenant en outre une commande d'entraînement reliée ou pouvant être reliée à l'entraînement de couvercle (8), laquelle commande d'entraînement est conçue pour régler, notamment sur la base d'une spécification d'un utilisateur ou d'une commande supérieure reliée à la commande d'entraînement, la force que l'entraînement de couvercle (8) exerce sur le couvercle (3) et la plaque de recouvrement (7) par l'intermédiaire de l'au moins un élément de liaison.

4. Dispositif (1) selon la revendication 3,
pour lequel la commande d'entraînement et/ou la commande de niveau supérieur est conçue pour générer et émettre un signal de commande représentant la force à régler sur la base d'une identification prédéfinie d'un ou de plusieurs récipients de réaction logés dans l'unité de base (2).

5. Dispositif (1) selon l'une des revendications 1 à 4,
pour lequel l'au moins un élément de liaison est couplé à un guide disposé dans l'unité de base (3) de telle sorte que le mouvement de l'au moins un élément de liaison (6) pendant la deuxième phase de mouvement est guidé linéairement dans une direction perpendiculaire à la plaque de recouvrement (7).

6. Dispositif (1) selon la revendication 5,
pour lequel une partie du guide guidant le déplacement de l'au moins un élément de liaison (6) pendant la deuxième phase de mouvement s'étendant entre la troisième et la deuxième position est perpendiculaire au plan dans lequel est disposé le bloc de régulation (13).

7. Dispositif (1) selon l'une des revendications 1 à 6,
pour lequel l'entraînement de couvercle (8) comprend un arbre d'entraînement rotatif (19) relié de manière rigide à au moins un bras de levier (9) s'étendant perpendiculairement à l'arbre d'entraînement (19), le bras de levier (9) étant couplé à l'au moins un élément de liaison (6) par l'intermédiaire d'un guide (10).

8. Dispositif (1) selon la revendication 7,
pour lequel le guide (10) est un guide linéaire pour le bras de levier (9) monté à rotation sur l'au moins un élément de liaison (6), ou
pour lequel le guide est formé par une fente de guidage, disposée dans le bras de levier ou l'au moins un élément de liaison, et au moins une broche mobile dans la fente de guidage.

9. Dispositif (1) selon l'une des revendications 1 à 8,
pour lequel un mouvement de l'au moins un élément de liaison (6) pendant la première et la deuxième phase de mouvement est guidé dans un guide disposé dans l'unité de base (2).

10. Dispositif (1) selon la revendication 9,
pour lequel l'au moins un élément de liaison (6) comprend au moins un élément de couplage, par exemple une broche (30), et
pour lequel le guide comprend une plaque de guidage (11) disposée dans l'unité de base et présentant une fente de guidage (12), dans laquelle l'élément de couplage est guidé.

11. Dispositif (1) selon l'une des revendications 1 à 10,
lequel comprend deux éléments de liaison (6) fixés sur des côtés opposés du couvercle (3).

12. Dispositif (1) selon l'une des revendications 1 à 11,
pour lequel l'entraînement de couvercle (8) comprend un engrenage autobloquant (16), notamment un engrenage à vis sans fin.

13. Dispositif (1) selon l'une des revendications 1 à 12,
pour lequel l'unité de base (2) comprend un boîtier comportant au moins une ouverture obturable, par exemple par une porte ou une paroi amovible (20), laquelle ouverture permet l'accès pour l'actionnement manuel de l'entraînement du couvercle (8).

14. Dispositif (1) selon l'une des revendications 1 à 13,
pour lequel l'unité de base (2) comprend un mécanisme d'éjection qui peut être actionné automatiquement par un ou plusieurs moteurs (28) et qui sert à déplacer les récipients de réaction disposés dans le bloc de régulation de température (13) dans la direction d'une normale au plan dans lequel est disposé le bloc de régulation de température (13).

15. Dispositif (1) selon l'une des revendications 14,
pour lequel le bloc de régulation de température (13) est disposé sur ou dans un module de bloc de régulation de température (23), lequel module est fixé dans l'unité de base (2), et pour lequel le mécanisme d'éjection comprend au moins un poussoir d'éjection (26) qui est monté de manière mobile dans le module de bloc de régulation de température (23) perpendiculairement au plan dans lequel le bloc de régulation de température (13) est disposé, et pour lequel le dispositif (1) comprend en outre au moins un entraînement de poussoir (27) disposé sur la face inférieure du module de bloc de régulation destiné à entraîner les mouvements du poussoir d'éjection (26), et pour lequel chaque poussoir d'éjection (26) est associé à son propre entraînement de poussoir (27), notamment contrôlable individuellement.
